(19) Europäisches Patentamt
European Patent Office
Office européen des brevets

(11) EP 2 265 036 B1

(12) FASCICULE DE BREVET EUROPEEN

(45) Date de publication et mention
de la délivrance du brevet:
**29.08.2012 Bulletin 2012/35**

(51) Int Cl.:
*H04Q 11/00* (2006.01)

(21) Numéro de dépôt: **10155784.1**

(22) Date de dépôt: **08.03.2010**

(54) **Noeud optique et procédé de transmission de paquets dans un réseau optique**

Optischer Knoten und Verfahren zur Übertragung optischer Pakete

Optical node and method of transmitting packets in an optical network

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.06.2009 FR 0954141**

(43) Date de publication de la demande:
**22.12.2010 Bulletin 2010/51**

(73) Titulaire: **Alcatel Lucent**
**75007 Paris (FR)**

(72) Inventeurs:
• **Zami, Thierry**
**91620, NOZAY (FR)**
• **Henri, Pascal**
**91620, NOZAY (FR)**

(74) Mandataire: **Sciaux, Edmond et al**
**Alcatel-Lucent International**
**Intellectual Property & Standards**
**32 Avenue Kléber**
**92700 Colombes (FR)**

(56) Documents cités:
**FR-A1- 2 756 693**

• **Ramaswami r et al: "Optical Networks - A Practical Perspective" 2002, Morgan Kaufmann Publishers , XP002568466 ISBN: 1558606556 , pages 615-655 * chapitre 12 ***
• **DELGADO MENDINUETA J M ET AL: "Cluster processing for the study of optical burst-mode digital signal processing receivers and subsystems for dynamic optical burst switching networks" 8 septembre 2008 (2008-09-08), BROADBAND COMMUNICATIONS, NETWORKS AND SYSTEMS, 2008. BROADNETS 2008. 5TH INTERNATIONAL CONFERENCE ON, IEEE, PISCATAWAY, NJ, USA, PAGE(S) 77 - 81 , XP031414724 ISBN: 9781424423910 * abrégé * * chapitre III.A ***

**Description**

La présente invention concerne un dispositif et un procédé de transmission de paquets dans un réseau optique transparent tels que décrits par exemple dans RAMASWANI R ET AL: "OPTICAL NETWORKS-A PRACTICAL PERSPECTIVE", 2002, MORGAN KAUFMANN PUBLISHERS, pages 615 à 675.

Un réseau optique par paquet à commutateur est un candidat intéressant pour la nouvelle génération de réseaux optiques permettant de répondre tant au besoin de transmission à haute capacité qu'au besoin d'une faible granularité de taux de transfert. C'est la raison pour laquelle il est étudié depuis plus de dix ans par de nombreuses équipes de recherche. Un des buts des paquets optiques est aussi de réduire la puissance consommée par les routeurs de paquet.

Une première idée pour transporter des paquets optiques dans un réseau optique transparent consiste à reproduire les modes opératoires des routeurs de paquet électroniques, mais transposés de manière optique. Des prototypes ont été réalisés qui démontrent la faisabilité. De tels dispositifs ne sont cependant pas satisfaisants en ce qu'ils ne permettent pas d'atteindre le niveau de qualité de service des routeurs électroniques, tant que leur consommation de puissance n'est pas sérieusement réduite.

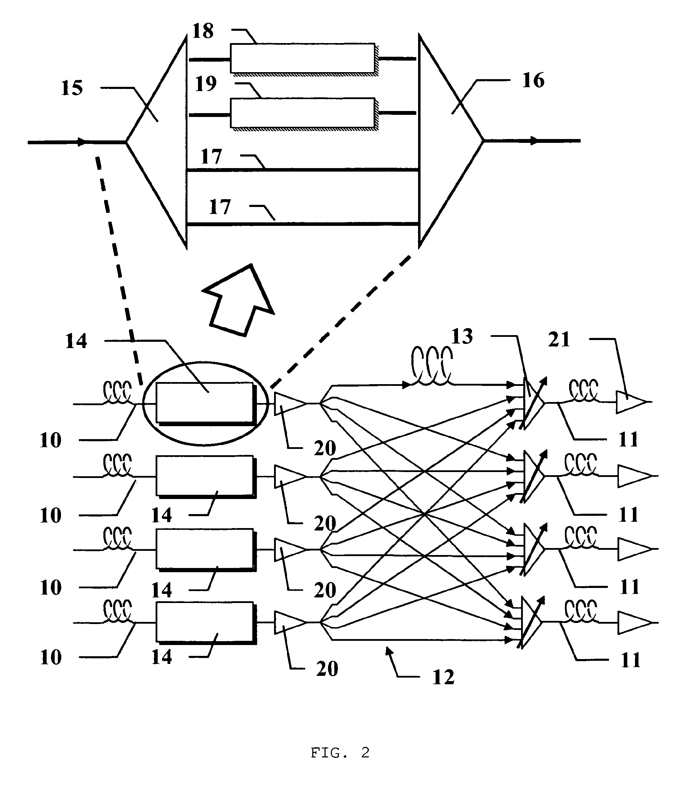

Une autre solution intéressante consiste à combiner des matrices de routage optiques avec des multiplexeurs d'insertion ou de retrait de paquet optique (OPADM). La figure 2 montre un exemple d'une telle combinaison de dispositifs.

Dans le cas des paquets optiques un problème se pose : le contrôle de l'excursion de puissance au niveau du récepteur final. Lorsqu'un récepteur détecte des paquets successifs présentant des décalages temporels et des puissances optiques différents, il doit être capable de les traiter en mode rafale (burst regime) où les paquets sont émis et reçus de manière discontinue. Cela signifie que dans ce mode le récepteur doit être capable de procéder à des recalages très rapides d'horloge et à des égalisations de puissance. Pour la même raison visant à faciliter la détection en mode rafale (burst detection), le réseau doit être conçu pour limiter tant que possible l'excursion de puissance optique sur un récepteur en mode rafale final. Pour atteindre cet objectif tous les paquets introduits dans un OPADM sont insérés avec une même puissance optique. Cette puissance est égale à la puissance moyenne des paquets qui transitent par l'OPADM. Cependant une telle méthode introduit un autre déséquilibre au niveau du récepteur en mode rafale : le rapport signal à bruit optique (OSNR) des paquets successivement détectés peut varier de manière significative en fonction des paramètres physiques de propagation des chemins respectifs depuis leur noeud source jusqu'à leur noeud destination.

Alors qu'un récepteur en mode rafale peut dans une certaine mesure compenser une excursion de puissance optique d'un paquet à l'autre, il n'y a aucun moyen de corriger efficacement une excursion du rapport signal à bruit optique d'un paquet à l'autre au niveau du récepteur. Ainsi dans un contexte de réseau à noyau optique, l'accumulation d'émissions spontanément amplifiées, est une cause principale de dégradation dudit rapport signal à bruit optique.

La présente invention réalise une optimisation de la transmission des paquets optiques au regard du rapport signal à bruit optique. Ce faisant, une réduction de la puissance optique globalement consommée par les amplificateurs à fibre optique dopée à l'erbium (EDFA) que les paquets optiques traversent, est obtenue.

L'excursion du rapport signal à bruit optique d'un paquet à l'autre, telle que vue par un noeud destination, est réduite. Pour cela il est réalisé une insertion dans un réseau optique de paquets au niveau de noeuds sources aptes à émettre des paquets dans le réseau optique à destination d'un noeud destination, avec une puissance optique d'émission fonction du noeud destination déterminée pour chaque noeud source de telle sorte que les paquets, lorsque émis avec ladite puissance d'émission, arrivent audit noeud destination apte à recevoir lesdits paquets, avec des rapports signal à bruit optiques sensiblement égaux d'un paquet à l'autre, quel que soit leur noeud source. Autrement dit, la puissance optique utilisée en émission est réglée, pour un paquet donné, en fonction d'un rapport signal à bruit optique constant souhaité en réception au noeud destination, en tenant compte, de manière à les compenser, des dégradations subies par ledit signal à bruit optique au long d'un chemin reliant ledit noeud source audit noeud destination.

D'autres caractéristiques, détails et avantages de l'invention ressortiront plus clairement de la description détaillée donnée ci-après à titre indicatif en relation avec des dessins sur lesquels :

- la figure 1 représente un exemple de réseau optique,
- la figure 2 illustre schématiquement un mode de réalisation d'un noeud optique, apte à implémenter l'invention,
- la figure 3 illustre schématiquement un mode de réalisation d'un détail d'un noeud optique, apte à implémenter l'invention.

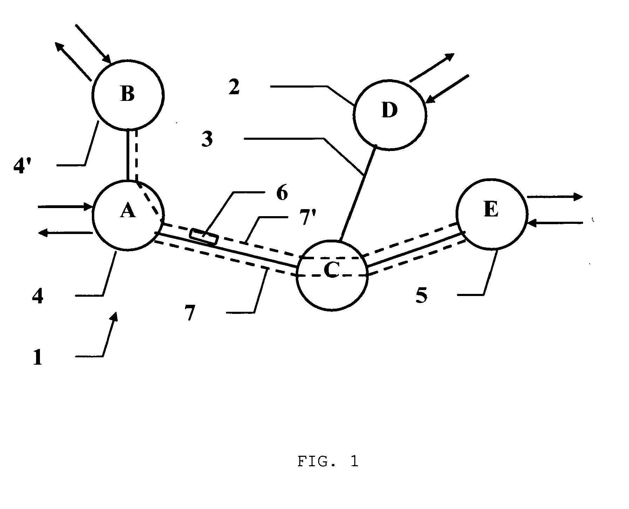

Selon la figure 1, un réseau optique 1 illustratif comporte des noeuds 2, A-E reliés par des liens 3. Un noeud 2 peut être un routeur, tels les noeuds A et C, un multiplexeur d'insertion et d'extraction de paquet optique (OPADM) permettant l'insertion ou l'extraction d'un paquet dans le réseau optique 1 figuré par une double flèche, tels les noeuds A, B, D et E, ou encore combiner les deux fonctions, tel le noeud A.

Un tel réseau optique 1 permet de transporter des paquets 6 entre des noeuds sources 4 aptes à émettre des paquets 6 dans le réseau optique 1 et au moins un noeud destination 5 apte à recevoir lesdits paquets (6) du réseau optique 1. On suppose pour la suite de la description qu'un paquet 6 est émis par un premier noeud source 4, A, ou respectivement par un second noeud source 4', B et est reçu un noeud destination 5, E. Au travers du réseau optique 1, ledit paquet suit un premier chemin 7, traversant les noeuds A, C et E, respectivement un second chemin 7' traversant les noeuds B, A, C et E.

Afin qu'au niveau du noeud destination 5, E, tous les paquets 6 arrivent avec un même rapport signal à bruit optique, autant un paquet arrivant de A, qu'un autre paquet ayant pour source un autre noeud, par exemple B, et ce malgré les différents chemins 7, 7' suivis et donc les possibles variations des paramètres physiques de propagation, les noeuds optiques sources qui émettent des paquets dans le réseau optique 1 mettent en oeuvre un procédé de transmission qui comprend les étapes suivantes.

Dans une première étape, pour chaque noeud source 4, une puissance optique d'émission des paquets est déterminée, fonction du noeud destination 5, en fonction des paramètres physiques de propagation des chemins 7, 7' que vont emprunter lesdits paquets pour atteindre ledit noeud destination 5, de telle manière à ce que les paquets arrivent au noeud destination 5 avec un rapport signal à bruit optique sensiblement donné, ou du moins avec un rapport signal à bruit optique contenu dans une excursion faible prédéterminée, par rapport aux autres paquets arrivant audit noeud destination 5.

Dans une seconde étape le paquet est émis en modulant la puissance d'émission pour qu'elle soit égale à ladite puissance optique d'émission précédemment déterminée.

Selon un mode de réalisation, une excursion du rapport signal à bruit optique à réception au niveau d'un noeud destination inférieure à +/-1dB/nm est satisfaisante vis-à-vis du problème posé. Toutefois, l'amplitude de cette plage de tolérance peut varier en fonction des spécificités des récepteurs en mode rafale employés dans le réseau.

La détermination de la puissance optique d'émission qui va ainsi servir de base au réglage de la puissance d'émission doit être réalisée paquet par paquet dans la mesure où, pour chaque paquet, un chemin 7 différent peut être emprunté. Sous certaines hypothèses simplificatrices détaillées plus avant, pour un paquet donné, le chemin 7 emprunté est connu à l'avance. Il est ainsi possible, en fonction du noeud destination 5 d'un paquet, de déterminer de manière unique le chemin suivi 7, et de lui associer une puissance optique d'émission. La détermination de la puissance optique d'émission peut ainsi être réalisée, pour chaque paquet, en fonction de son noeud destination 5.

Cette nouvelle détermination de la puissance optique, remise en cause à chaque paquet, doit être effectuée durant un laps de temps très court et à tout le moins trop court pour permettre un quelconque retour de l'information depuis le noeud destination 5, pour le paquet courant. Il n'est donc pas possible d'utiliser ici une boucle de contre-réaction ou boucle fermée. Ainsi, la détermination de la puissance optique est nécessairement réalisée en boucle ouverte. La puissance d'émission doit nécessairement être prédéterminée, par exemple dans une phase de réglage, préalable à la phase d'exploitation.

La détermination de la puissance optique d'émission peut s'effectuer selon différents modes de réalisation. Une première approche consiste à modéliser le réseau optique 1 en terme de qualité de propagation. Ainsi la qualité d'un chemin 7, reliant un noeud source 4 à un noeud destination 5, est déterminée en fonction des paramètres physiques de propagation du chemin 7.

Les paramètres physiques influant sur le rapport signal à bruit optique peuvent par exemple être exprimés sous forme d'un facteur de bruit NF (ou noise figure, NF, en anglais). Un facteur de bruit NF peut être associé individuellement à chaque constituant actif du chemin, ou encore de manière globale au chemin 7 lui-même en cumulant les effets de tous les équipements rencontrés le long du chemin.

Une première source de perturbation du rapport signal à bruit optique est constituée par les segments de fibre optique. Cependant un segment de fibre optique influe peu sur le rapport signal à bruit optique et, en pratique, aucun facteur de bruit NF n'est associé aux segments de fibre optique.

Une autre source de perturbation est située au niveau des différents dispositifs ou équipements optiques 2 croisés par le paquet 6 le long de son chemin 7. On peut considérer chaque dispositif optique comme un perturbateur auquel est associé un facteur de bruit NF. Selon la modélisation du réseau retenu, chaque équipement ou type d'équipement peut se voir affecté un facteur de bruit propre, par exemple déterminé en fonction des caractéristiques indiquées par le fabricant. Alternativement un facteur de bruit moyen unique peut être utilisé pour tous les équipements. Les facteurs de bruit NF des composants successifs d'un chemin 7 se combinent pour déterminer un facteur de bruit du chemin 7.

Dans le cas des amplificateurs optiques, principaux équipements perturbateurs, les bruits s'additionnent linéairement. La perturbation induite par un amplificateur optique est déterminée par la formule :

$$\frac{1}{OSNR_{out}} = \frac{1}{OSNR_{in}} + \gamma \frac{NF}{P_{in}}$$

Avec :

OSNR$_{in}$ : rapport signal à bruit optique en entrée de l'amplificateur optique,

OSNR$_{out}$ : rapport signal à bruit optique en sortie de l'amplificateur optique,

NF : facteur de bruit de l'amplificateur,

P$_{in}$ : puissance du signal optique en entrée de l'am-

plificateur optique,

$\gamma$ : puissance constante égal à -58dBm.

Pour un chemin 7 comprenant N amplificateurs indicés selon i de 1 à N, la formule devient :

$$\frac{1}{OSNR_{i+1}} = \frac{1}{OSNR_i} + \gamma \frac{NF_i}{P_i}$$

Avec :

$OSNR_i$ : rapport signal à bruit optique en entrée du ième amplificateur optique,
$OSNR_{i+1}$ : rapport signal à bruit optique en sortie du ième amplificateur optique,
$NF_i$ : facteur de bruit du ième amplificateur,
$P_i$ : puissance du signal optique en entrée du ième amplificateur optique,
$\gamma$ : puissance constante égal à -58dBm.

Le rapport signal à bruit final, en sortie du Nème amplificateur est déterminé par :

$$\frac{1}{OSNR_{N+1}} = \frac{1}{OSNR_1} + \gamma \sum_{i=1}^{N} \frac{NF_i}{P_i} \; .$$

Selon les hypothèses simplificatrices suivantes : $1/OSNR_1$ est négligeable, tous les amplificateurs sont identiques, et le gain G de chaque amplificateur est déterminé de manière à compenser les pertes de la section de transmission qui le précède, afin de produire une ligne de transmission équilibrée. Sous cette hypothèse, la puissance d'entrée dans chacun des amplis est la même et l'on obtient :

$$\frac{1}{OSNR} = \gamma * N * \frac{NF}{P*G} ,$$

ou encore

$$P = OSNR + \gamma + NF + G + 10.Log_{10}(N) ,$$

exprimé en dBm,
avec :

P : puissance d'émission à la source,
OSNR : rapport signal à bruit optique final à destination,
NF : facteur de bruit des amplificateurs,
G : gain des amplificateurs,
N : nombre d'amplificateurs cascadés (ou nombre de segments).

Selon un mode de réalisation simple, seule le nombre de segments et donc d'amplificateurs, supposé par approximation identiques, est considéré. En simplifiant encore, le nombre d'amplificateurs étant supposé sensiblement constant par unité de longueur, la longueur du chemin 7 est considérée.

De plus, afin d'encore simplifier, il n'est retenu qu'un nombre réduit de classes de longueur, un facteur de bruit NF, ou ce qui est équivalent une puissance d'émission étant associée à chaque classe.

Ainsi, selon un exemple avec trois classes, la longueur de chaque chemin 7 est comparée avec deux seuils de longueur. Si la longueur du chemin est inférieure à 500km, la puissance d'émission déterminée est égale à x dBm. Si la longueur du chemin est comprise entre 500km et 1500km, la puissance d'émission déterminée est égale à x+2 dBm. Si la longueur du chemin est supérieure à 1500km, la puissance d'émission déterminée est égale à x+4 dBm, x étant une valeur constante.

Une autre approche alternative à la modélisation consiste à mesurer la qualité du chemin 7 par exemple en mesurant ou en déterminant au moyen d'une mesure le facteur de bruit NF global d'un chemin 7. Ceci peut être réalisé dans une phase préalable ou concomitante à l'exploitation du réseau optique 1 en utilisant au moins un paquet test pour chaque chemin 7 pour lequel on mesure le rapport signal à bruit optique. La puissance d'émission à la source 4 étant connue, il est possible d'en déduire le facteur de bruit NF du chemin 7 sous réserve que le paquet ne traverse pas d'élément dont la puissance optique de sortie du canal sature. La valeur de la puissance d'émission est prédéterminée par convention préalable ou peut être transmise, par exemple par le paquet test lui-même. La valeur de rapport signal à bruit optique est déterminée par mesure au noeud destination 5. La valeur du rapport signal à bruit optique associée à un chemin 7 peut ensuite être transmise au noeud source, par toute méthode de transmission, pour permettre de déterminer ultérieurement la puissance d'émission d'un paquet 6 destiné à transiter via ledit chemin 7, jusqu'audit noeud destination 5.

Il apparaît à l'homme du métier que le procédé est applicable à tout réseau optique 1 pour lequel le chemin 7 emprunté par un paquet 6, ou à tout le moins les paramètres physiques de propagation du chemin 7, sont connus a priori, afin de pouvoir déterminer une puissance d'émission qui garantisse un rapport signal à bruit optique donné à destination 5. Ceci est le cas de certaines organisations de réseau optique 1 où par exemple le routage est réalisé de manière déterministe. Ceci est le cas par exemple des topologies simples telle celle d'un réseau en anneau, ou encore lorsque le chemin est préétabli dans un maillage.

Quelle que soit la méthode de détermination de la puissance d'émission, par modélisation ou par mesure, les données de puissance d'émission, de rapport signal à bruit optique final et/ou encore les paramètres physiques de propagation sont avantageusement stockés dans une table de référence, indexée en fonction du chemin suivi 7 ou ce qui équivalent du noeud destination 5. Ceci permet de retrouver rapidement ces données lors d'une utilisation ultérieure visant à déterminer une puissance d'émission pour un chemin donné.

L'approche ainsi développée consistant à déterminer la puissance d'émission à la source 4 en fonction d'un rapport signal à bruit optique constant à destination 5, est une approche globale sur l'ensemble du chemin 7 depuis le noeud source 4 où le paquet 6 entre dans le réseau optique 1 jusqu'au noeud destination 5 où le paquet 6 quitte le réseau optique 1. Une telle approche peut être contradictoire avec une approche locale habituellement utilisée consistant à égaliser automatiquement les puissances optiques au niveau de chaque noeud traversé. Aussi le procédé est avantageusement implanté dans un réseau optique 1 où une telle égalisation automatique n'est pas mise en oeuvre.

Il est possible de construire un noeud source apte à implémenter la méthode selon l'un des modes de réalisation précédents.

Un tel noeud source peut par exemple être réalisé sur la base du schéma de la figure 2. Le noeud représenté comporte quatre entrées 10 et quatre sorties 11. Entre les entrées 10 et les sorties 11 est disposée une matrice 4x4, 12 qui duplique par quatre chacun des signaux optiques en entrée. Un sélecteur programmable 13 (Wavelength Selective Switch, WSS) permet de choisir le signal transmis sur une sortie 11. Au niveau de chaque entrée 10, un OPADM 14 est inséré. Des amplificateurs optiques 20, 21 peuvent être disposés en différents points du schéma, par exemple du type comprenant une fibre optique dopée à l'erbium (EDFA).

Le haut de la figure présente une vue détaillée d'un tel OPADM 14. Il comprend un démultiplexeur 15 en entrée qui permet de séparer les signaux en canaux fonction de leur fréquence et un multiplexeur 16 en sortie. Chacun des différents canaux est au choix un canal passant 17 afin par exemple de permettre un reroutage, ou un canal équipé d'un boîtier d'insertion (ADD) et d'éjection (DROP) 18, 19. Ainsi lorsque qu'un tel boîtier 18, 19 est disposé sur une voie correspondant à la longueur d'onde d'un canal particulier, il est possible d'insérer ou d'extraire des paquets optiques sur ce canal.

Un noeud selon un tel schéma permet de réaliser les fonctions de routage en pilotant les sélecteurs programmables 13 et les fonctions d'insertion/éjection en utilisant les canaux d'insertion ou d'éjection 18, 19.

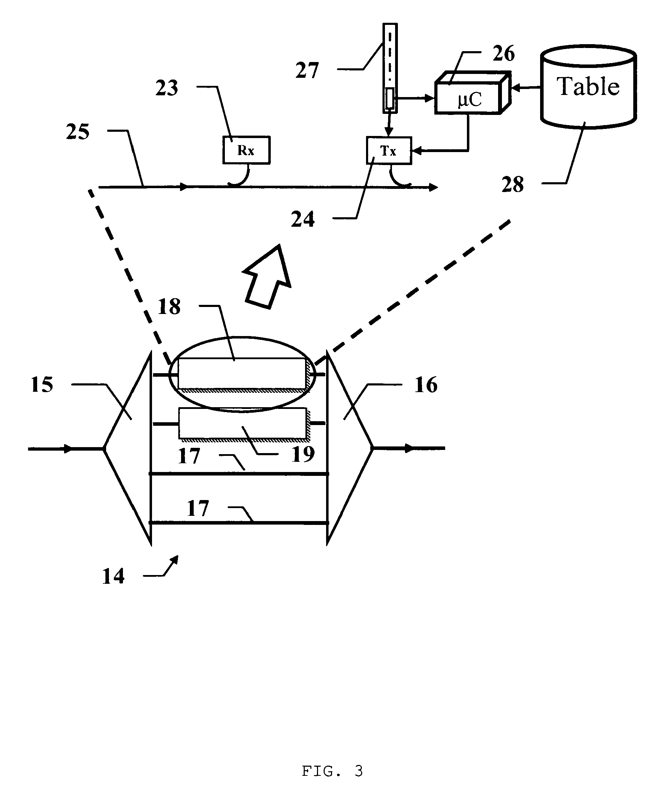

La figure 3 reprend un schéma d'un tel OPADM 14 avec un démultiplexeur optique 15 et un multiplexeur optique 16 reliés par des lignes 17, 18 et 19.

Le haut de la figure présente une vue détaillée de la ligne 18. Cette ligne 18 comprend un segment optique 25 où les paquets transitent de gauche à droite dans le plan de la figure. Ce segment optique 25 est équipé d'un boîtier d'insertion 24 et d'un boîtier de lecture 23. L'insertion/émission d'un paquet arrivant par une file d'attente 27 stockant les paquets à insérer est pilotée par un contrôleur 26. Ledit contrôleur 26 commande le réglage de la puissance d'émission selon l'invention en pilotant le boîtier d'insertion 24, pour chaque paquet issu de la file d'attente 27.

Le contrôleur 26 se réfère par exemple, pour commander ce réglage, à une table de référence 28 contenant la puissance d'émission prédéterminée, indexée en fonction du noeud destination 5 ou du chemin 7 du paquet inséré/émis.

**Revendications**

1. Procédé de transmission de paquets (6) dans un réseau optique transparent (1) comprenant plusieurs noeuds sources (4) aptes à émettre des paquets (6) dans le réseau optique (1), et au moins un noeud destination (5) apte à recevoir lesdits paquets (6) du réseau optique (1), **caractérisé en ce qu'**il comprend les étapes de:

   - détermination pour chaque noeud source (4) d'une puissance optique d'émission fonction du noeud destination (5), de telle manière à ce que lesdits paquets (6), lorsque émis avec ladite puissance d'émission, arrivent au noeud destination (5) avec des rapports signal à bruit optiques sensiblement égaux, quel que soit leur noeud source, la détermination dépendant des paramètres physiques de propagation des dispositifs optiques (2) croisés le long d'un chemin (7) reliant le noeud source (4) émetteur audit noeud destination (5), ou s'effectuant à partir d'un rapport signal à bruit optique final mesuré au noeud destination (5) au moyen d'au moins un paquet test,
   - émission desdits paquets (6) avec ladite puissance optique d'émission déterminée

2. Procédé de transmission selon la revendication 1, où des rapports signal à bruit optiques sont considérés sensiblement égaux lorsqu'ils diffèrent de moins de +/-1dB/nm.

3. Procédé de transmission selon la revendication 1 ou 2, où lesdits paramètres physiques de propagation comprennent la longueur dudit chemin (7).

4. Procédé de transmission selon l'une quelconque des revendications 1 à 3, où lesdits paramètres physiques de propagation comprennent le nombre de dispositifs optiques (2) disposés le long dudit chemin (7).

5. Procédé de transmission selon l'une quelconque des revendications 1 à 4, où ladite puissance optique d'émission est déterminée par une fonction croissante de la longueur dudit chemin (7).

**6.** Procédé de transmission selon la revendication 5, où ladite fonction sépare les longueurs de chemin en un nombre donné de classes, une puissance optique d'émission étant associée à chaque classe.

**7.** Procédé de transmission selon l'une quelconque des revendications 1 à 6, où ladite puissance optique d'émission, une fois déterminée, est stockée dans une table de référence, pour une utilisation rapide lors des étapes ultérieures de détermination.

**8.** Réseau optique transparent (1) de transport de paquets (6) comprenant plusieurs noeuds sources (4) aptes à émettre des paquets (6) dans le réseau optique (1), et au moins un noeud destination (5) apte à recevoir lesdits paquets (6) du réseau optique (1), chacun des noeuds sources (4) étant **caractérisé en ce qu'**il comprend :

- des moyens de détermination pour déterminer une puissance optique d'émission fonction du noeud destination (5), de telle manière à ce qu'un paquet (6), lorsque émis avec ladite puissance d'émission, arrive au noeud destination (5) avec un rapport signal à bruit optique sensiblement égal au rapport signal à bruit optique d'un autre paquet arrivant au noeud destination (5) depuis un autre noeud source, la détermination dépendant des paramètres physiques de propagation des dispositifs optiques (2) croisés le long d'un chemin (7) reliant le noeud source audit noeud destination (5), ou s'effectuant à partir d'un rapport signal à bruit optique final mesuré au noeud destination (5) au moyen d'au moins un paquet test,
- des moyens d'émission pour émettre ledit paquet (6) avec ladite puissance optique d'émission déterminée

**9.** Réseau selon la revendication 8, où des rapports signal à bruit optiques sont considérés sensiblement égaux lorsqu'ils diffèrent de moins de +/-1dB/nm.

**10.** Réseau selon la revendication 8 ou 9, où lesdits paramètres physiques de propagation comprennent la longueur dudit chemin (7).

**11.** Réseau selon l'une quelconque des revendications 8 à 10, où lesdits paramètres physiques de propagation comprennent le nombre de dispositifs optiques (2) disposés le long dudit chemin (7).

**12.** Réseau selon l'une quelconque des revendications 8 à 11, où ladite puissance optique d'émission est déterminée par une fonction croissante de la longueur dudit chemin (7).

**13.** Réseau selon la revendication 12, où ladite fonction sépare les longueurs de chemin en un nombre donné de classes, une puissance optique d'émission étant associée à chaque classe.

**14.** Réseau selon l'une quelconque des revendications 8 à 13, comprenant encore une table de référence pour stocker la puissance optique d'émission une fois déterminée, pour une utilisation ultérieure rapide.

**Claims**

**1.** A method for transmitting packets (6) within a transparent optical network (4) capable of emitting (1), and at least one of said packets (6) within the optical network (1), and at least one destination node (5) capable of receiving said packets (6) from the optical network (1), **characterized by** comprising:

- determining for each source node (4) an optical output power based on the destination node (5), in such a way that the packets, when emitted with said output power, arrive at the destination node (5) with roughly equal optical signal-to-noise ratios, regardless of their source node, the determination being dependent on the physical propagation parameters of optical cross-connect devices (2) along a path (7) connecting the emitting source node (4) to said destination node (5), or being carried out based on a final signal-to-noise ratio measured at the destination node (5) by means of at least one test packet,
- transmitting said packets (6) with the determined optical output power.

**2.** A transmission method such as detailed in claim 1, where optical signal-to-noise ratios are considered roughly equal when they differ by less than +/- 1dB/nm.

**3.** A transmission method as in claim 1 or 2, where the physical propagation parameters include the length of the path (7).

**4.** A transmission method according to any one of the claims 1 to 3, where the physical propagation parameters comprise the number of optical devices (2) along the path (7).

**5.** A transmission method according to any one of the claims 1 to 4, where said optical output power is determined by an increasing function of the length of the path (7).

**6.** A transmission method according to claim 5, where said function separates the path lengths into a given number of classes, an optical output power being associated with each class.

**7.** A transmission method according to any one of the claims 1 to 6, where the optical output power, once determined, is stored in a reference table, for fast use during the later steps of determination.

**8.** A transparent optical network (1) for transporting packets (6) comprising multiple source nodes (4) capable of transmitting packets (6) within the optical network (1), and at least one destination node (5) capable of receiving the packets (6) of the optical network (1), each of the source nodes (4) **characterized by** comprising:

- means of determination for establishing an optical output power based on the destination node (5), in such a way that a packet (6), when emitted with said output power, arrives at the destination node (5) with an optical signal-to-noise ratio roughly equal to the optical signal-to-noise ratio of another packet arriving at the destination node (5) from a different source node, the determination being dependent on the physical propagation parameters of optical cross-connect devices (2) along a path (7) connecting the emitting source node (4) to the destination node (5), or being carried out based on a final signal-to-noise ratio measured at the destination node (5) by means of at least one test packet,
- output means for emitting the packet (6) with the determined optical output power.

**9.** A network as described in claim 8, where optical signal-to-noise ratios are considered roughly equal when they differ by less than +/-1dB/nm.

**10.** A network according to claim 8 or 9, where the physical propagation parameters comprise the length of the path (7).

**11.** A network according to any one of the claims 8 to 10, where the physical propagation parameters comprise the number of optical devices (2) along the path (7).

**12.** A network according to any one of the claims 8 to 11, where the optical output power is determined by an increasing function of the length of the path (7).

**13.** A network according to claim 12, where said function separates the path lengths into a given number of classes, an optical output power being associated with each class.

**14.** A network according to any one of the claims 8 to 13, further comprising a reference table for storing the optical output power once determined, for fast use later.

**Patentansprüche**

**1.** Verfahren zur Übertragung von Paketen (6) in einem transparenten optischen Netzwerk (1) mit mehreren Quellknoten (4), die fähig sind, Pakete (6) in dem optischen Netzwerk (1) auszusenden, und mindestens einem Zielknoten (5), der fähig ist, die besagten Pakete (6) des optischen Netzwerks (1) zu empfangen, **dadurch gekennzeichnet, dass** es die folgenden Schritte umfasst:

- Bestimmen, für jeden Quellknoten (4), einer von dem Zielknoten (5) abhängigen optischen Sendeleistung, so dass die besagten Pakete (6), wenn sie mit der besagten Sendeleistung ausgesendet werden, ungeachtet derer Quellknoten mit im Wesentlichen gleichwertigen optischen Signal-Rausch-Verhältnissen am Zielknoten (5) ankommen, wobei das Bestimmen von den physischen Verbreitungsparametern der optischen Vorrichtungen (2), die längs eines Pfads (7), welcher den aussendenden Quellknoten (4) mit dem besagten Zielknoten (5) verbindet, durchquert werden, abhängt oder ausgehend von einem am Zielknoten (5) anhand mindestens eines Testpakets gemessenen abschließenden Signal-Rausch-Verhältnis erfolgt;
- Aussenden der besagten Pakete (6) mit der besagten bestimmten optischen Sendeleistung.

**2.** Verfahren zur Übertragung nach Anspruch 1, wobei die optischen Signal-Rausch-Verhältnisse als im Wesentlichen gleichwertig betrachtet werden, wenn der Unterschied weniger als +/-1 dB/nm beträgt.

**3.** Verfahren zur Übertragung nach Anspruch 1 oder 2, wobei die besagten physischen Verbreitungsparameter die Länge des besagten Pfads (7) umfassen.

**4.** Verfahren zur Übertragung nach einem beliebigen der Ansprüche 1 bis 3, wobei die besagten physischen Verbreitungsparameter die Anzahl der längs des besagten Pfads (7) angeordneten optischen Vorrichtungen (2) umfassen.

**5.** Verfahren zur Übertragung nach einem beliebigen der Ansprüche 1 bis 4, wobei die besagte optische Sendeleistung durch eine steigende Funktion der Länge des besagten Pfads (7) bestimmt wird.

**6.** Verfahren zur Übertragung nach Anspruch 5, wobei die besagte Funktion die Pfadlängen in eine gegebene Anzahl von Klassen unterteilt und einer jeden Klasse eine optische Sendeleistung zugeordnet wird.

7. Verfahren zur Übertragung nach einem beliebigen der Ansprüche 1 bis 6, wobei die besagte optische Sendleistung, sobald sie bestimmt wurde, für eine schnelle Verwendung bei den zukünftigen Bestimmungsschritten in einer Bezugstabelle gespeichert wird.

8. Transparentes optisches Netzwerk (1) für den Transport von Paketen (6), mit mehreren Quellknoten (4), die fähig sind, Pakete (6) in dem optischen Netzwerk (1) auszusenden, und mindestens einem Zielknoten (5), der fähig ist, die besagten Pakete (6) des optischen Netzwerks (1) zu empfangen, wobei ein jeder der Quellknoten (4) **dadurch gekennzeichnet ist, dass** er umfasst:

   - Mittel zum Bestimmen einer von dem Zielknoten (5) abhängigen optischen Sendeleistung, so dass ein Paket (6), wenn es mit der besagten Sendeleistung ausgesendet wird, mit einem im Wesentlichen mit dem optischen Signal-Rausch-Verhältnis eines anderen Pakets, welches von einem anderen Quellknoten an dem Zielknoten (5) ankommt, gleichwertigen optischen Signal-Rausch-Verhältnis am Zielknoten (5) ankommt, wobei das Bestimmen von den physischen Verbreitungsparametern der optischen Vorrichtungen (2), die längs eines Pfads (7), welcher den Quellknoten (4) mit dem besagten Zielknoten (5) verbindet, durchquert werden, abhängt oder ausgehend von einem am Zielknoten (5) anhand mindestens eines Testpakets gemessenen abschließenden Signal-Rausch-Verhältnis erfolgt;
   - Mittel zum Aussenden des besagten Paketes (6) mit der besagten bestimmten optischen Sendeleistung.

9. Netzwerk nach Anspruch 8, wobei optische Signal-Rausch-Verhältnisse als im Wesentlich gleichwertig betrachtet werden, wenn der Unterschied weniger als +/-1 dB/nm beträgt.

10. Netzwerk nach Anspruch 8 oder 9, wobei die besagten physischen Verbreitungsparameter die Länge des besagten Pfads (7) umfassen.

11. Netzwerk nach einem beliebigen der Ansprüche 8 bis 10, wobei die besagten physischen Verbreitungsparameter die Anzahl der längs des besagten Pfads (7) angeordneten optischen Vorrichtungen (2) umfassen.

12. Netzwerk nach einem beliebigen der Ansprüche 8 bis 11, wobei die besagte optische Sendeleistung durch eine steigende Funktion der Länge des besagten Pfads (7) bestimmt wird.

13. Netzwerk nach Anspruch 12, wobei die besagte Funktion die Pfadlängen in eine gegebene Anzahl von Klassen unterteilt und einer jeden Klasse eine optische Sendeleistung zugeordnet wird.

14. Netzwerk nach einem beliebigen der Ansprüche 8 bis 13, weiterhin umfassend eine Bezugstabelle zum Speichern der bestimmten optischen Sendeleistung für eine schnelle zukünftige Verwendung.

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RAMASWANI R et al.** OPTICAL NETWORKS-A PRACTICAL PERSPECTIVE. MORGAN KAUFMANN PUBLISHERS, 2002, 615-675